# EUROPÄISCHE PATENTSCHRIFT

(11) **EP 0 796 282 B1**
(45) Veröffentlichungstag und Bekanntmachung des Hinweises auf die Patenterteilung: **05.08.1998**
(21) Anmeldenummer: 95941699.1
(22) Anmeldetag: 07.12.1995
(51) Int. Cl.: C08F 2/00, C08F 14/06, B01J 19/00

(54) **VERFAHREN ZUR RADIKALISCHEN POLYMERISATION ETHYLENISCH UNGESÄTTIGTER MONOMERE IN WÄSSERIGEM MEDIUM**
PROCESS FOR THE RADICAL POLYMERISATION OF ETHYLENICALLY UNSATURATED MONOMERS IN AN AQUEOUS MEDIUM
PROCEDE DE POLYMERISATION PAR VOIE RADICALAIRE DE MONOMERES ETHYLENIQUEMENT INSATURES, EN MILIEU AQUEUX

(30) Priorität: 08.12.1994 DE 4443752
(43) Veröffentlichungstag der Anmeldung: 24.09.1997
(73) Patentinhaber: Vinnolit Kunststoff GmbH, D-85737 Ismaning (DE)
(72) Erfinder: KREILEIN, Kurt, D-84489 Burghausen (DE); ANDREJEWSKI, Dirk, D-84489 Burghausen (DE); HAMMER, Helmut, A-5282 Ranshofen (AT); JETZLSPERGER, Hellmut, D-84533 Haiming (DE)
(74) Vertreter: Schuderer, Michael
(86) Internationale Anmeldenummer: EP9504830
(87) Internationale Veröffentlichungsnummer: WO9617875

(56) Entgegenhaltungen:
- EP-A- 0 343 919
- US-A- 2 880 076

## Beschreibung

Die Erfindung betrifft ein Verfahren zur radikalischen Polymerisation ethylenisch ungesättigter Monomere in wäßrigem Medium sowie eine Vorrichtung zur Durchführung des Verfahrens.

Verfahren zur Polymerisation von ethylenisch ungesättigten Monomeren in wäßrigem Medium, wie beispielsweise die Emulsions-, Suspensions- oder Mikrosuspensions-Polymerisation, sind in der Literatur ausführlich beschrieben und den Fachleuten beispielsweise aus folgenden Druckschriften bekannt: Houben-Weyl, Methoden der organischen Chemie 4. Aufl., Band XIV, Stuttgart (1961); Houben-Weyl, Methoden der organischen Chemie, Band E 20, Stuttgart (1987); EP-B-35785, EP-B-78043, EP-B-93936.

Die radikalische Polymerisation von ethylenisch ungesättigten Monomeren in wäßrigem Medium wird in der Regel unter Rühren in Polymerisationsbehältern, beispielsweise Autoklaven durchgeführt. Im Autoklaven werden dazu das Ansatzwasser, die Monomerfraktion, Puffersalze, Emulgatoren, Schutzkolloide und gegebenenfalls Keimlatices zusammen mit dem Initiator oder im Falle von Redoxinitiatoren, zusammen mit den Initiatorkomponenten, ganz oder teilweise vorgelegt, durchmischt, und gegebenenfalls auf Polymerisationstemperatur aufgeheizt und unter Rühren und Abführen der Polymerisationswärme, die Monomeren auspolymerisiert. Dabei können auch die einzelnen Komponenten des Polymerisationsansatzes, wie beispielsweise Monomere, Emulgatoren und/oder Initiatoren, nachdosiert werden. Am Ende der Polymerisation werden die nicht umgesetzten Monomeren, unter Ausnutzung der Polymerisationswärme oder Energieeintrag von außen, abgezogen oder der Autoklaveninhalt in einen nachgeschalteten Behälter abgelassen und dort die Restmonomeren aus dem erhaltenen Polymerlatex oder der Polymersuspension entfernt.

Ein großes Problem bei der radikalischen Polymerisation ethylenisch ungesättigter Monomere sind die sich während der Polymerisation bildenden Wandbeläge. Diese behindern die Wärmeabführung aus dem Reaktionsbehälter und müssen nach jeder Charge durch aufwendige Reinigungsverfahren von der Behälterinnenwand entfernt werden.

Zur Reinigung der Behälterwand wird in der Regel Hochdruckwasser benutzt, welches mit z.B. 200 bar durch rotierende Düsen auf die Behälterwand gespritzt wird. Dazu werden die Behälter entweder geöffnet und entsprechende Reinigungsgeräte durch eine Behälteröffnung, z.B. das offene Mannloch, eingehängt, oder es werden am Behälter festinstallierte Reinigungsgeräte benutzt. Dabei fallen Abfälle und belastete Abwässer an, welche verbracht werden müssen; weiter sind diese Reinigungsvorgänge zeitaufwendig. Eine solche Vorgehensweise wird beispielsweise in der GB-A-1557928 erwähnt.

Zur Verhinderung von Wandbelägen bei der radikalischen Polymerisation von ethylenisch ungesättigten Monomeren in wäßriger Phase werden daher eine Vielzahl von Wandbeschichtungsmittel vorgeschlagen, welche auf die Autoklavenwand vor der Polymerisation aufgebracht werden und durch ihre inhibierende Wirkung die Bildung von Wandbelägen verhindern sollen. Die Beschichtung der Autoklavenwand wird beispielsweise in der US-A-4661569 beschrieben. Die Nachteile solcher Wandbeschichtungsmittel sind deren Kosten, die zum Aufbringen notwendige Zeit und Apparaturen sowie ihre bei der Emulsionspolymerisation begrenzte Wirksamkeit, da die dabei eingesetzten Emulgatorsysteme ein Ablösen der Beschichtung von der Behälterwand beschleunigen.

Eine dringende Aufgabe bestand daher darin, die bisherigen Verfahren und Vorrichtungen zur radikalischen Polymerisation von ethylenisch ungesättigten Monomeren in wäßrigem Medium so zu verbessern, daß die Bildung von Wandbelägen auf der Autoklavenwand vermieden wird, und dadurch mehrere Polymerisationsansätze nacheinander, ohne Hochdruckreinigung, ohne die Notwendigkeit der Wandbeschichtung und ohne das Öffnen der Behälter gefahren werden können.

Gegenstand der Erfindung ist ein Verfahren zur radikalischen Polymerisation von ethylenisch ungesättigten Monomeren in wäßrigem Medium, dadurch gekennzeichnet, daß
a) das zur Polymerisation eingesetzte Ansatzwasser und die zur Polymerisation benötigten Edukte wie Monomere, Keimlatex, Puffersubstanzen, Emulgatoren und/oder Schutzkolloide ganz oder teilweise in einer Vormischapparatur vorgelegt und durchmischt werden, und vor Überführung in den Polymerisationsbehälter auf die Polymerisationstemperatur aufgeheizt werden, wobei bei Verwendung eines thermischen Radikalinitiators kein Initiator und bei Verwendung eines Redoxinitiatorsystems nur einzelne Initiatorkomponenten vorgelegt werden,
b) die auf die Polymerisationstemperatur aufgeheizte Mischung in einen Polymerisationsbehälter übergeführt wird, dessen Wand bei Zuführung der Mischung und während der Polymerisation, durch Kühlung auf einer Temperatur unterhalb der Polymerisationstemperatur gehalten wird, die Polymerisation durch Zudosieren des thermischen Initiators oder der weiteren Initiatorkomponenten des Redoxinitiatorsystems gestartet wird, wobei gegebenenfalls die restlichen Edukte beim Start und/oder während der Polymerisation zudosiert werden, und
c) nach Abschluß der Polymerisation und Druckausgleich bis zu einem Differenzdruck p ≤ 3 bar zwischen Polymerisationsbehälter und Entgasungsbehälter, die Polymerdispersion in einen Entgasungsbehälter abgelassen wird und durch Aufheizen und/oder Anlegen von Vakuum entgast wird.

Ein weiterer Gegenstand der Erfindung ist eine Vorrichtung zur Durchführung des Verfahrens im wesentlichen bestehend aus einer Vormischapparatur (1), einen über Leitung (5) daran angekoppelten Polymerisationsbehälter (7), welcher über Leitung (10) mit dem Entgasungsbehälter (11) verbunden ist, wobei die Vormischapparatur (1) im wesentlichen mit Zuleitungen (3) zum Stoffeintrag, mit einer Heizeinrichtung und gegebenenfalls einer Mischeinrichtung ausgerüstet ist, der Polymerisationsbehälter (7) im wesentlichen mit Zuleitungen (9) zum Stoffeintrag, mit einer Heiz/Kühleinrichtung und einem Rührer (8) ausgerüstet ist und der Entgasungsbehälter (11) im wesentlichen mit einer Heiz/Kühleinrichtung, einem Rührer (12) und einer Vakuumleitung (13) ausgerüstet ist.

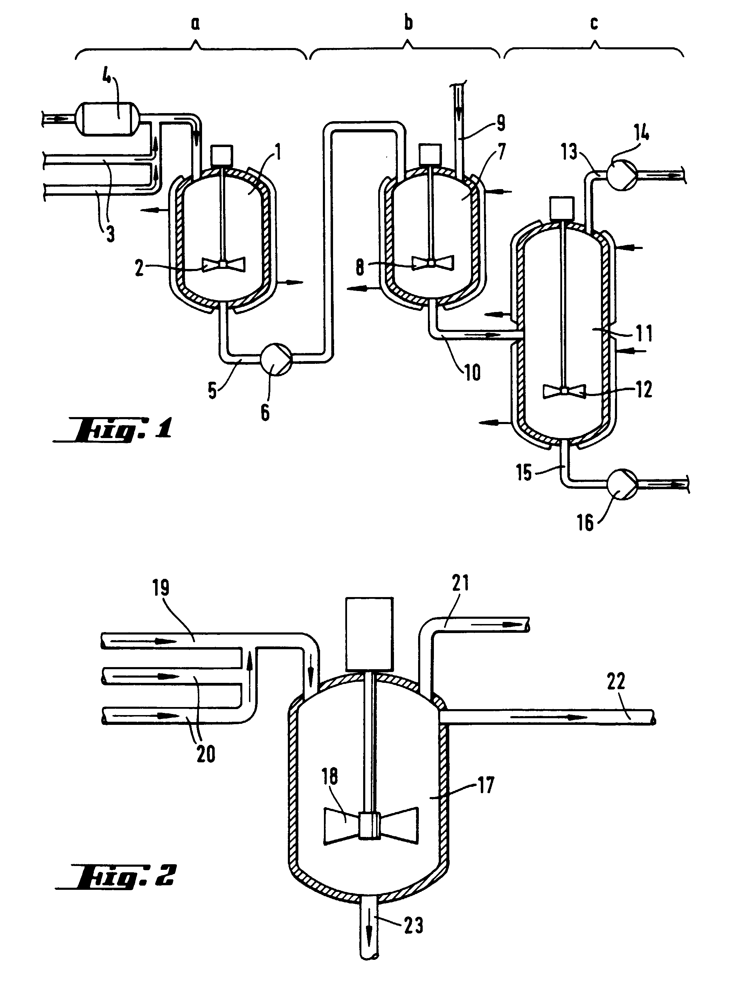

In Figur 1 wird eine bevorzugte Ausführungsform der erfindungsgemäßen Vorrichtung dargestellt: Die Vormischapparatur (1) ist vorzugsweise ein zylindrischer Rührbehälter mit mehreren Zuleitungen (3) für den Stoffeintrag. Zur Zumischung von festen Polymerisationshilfsstoffen kann der Vormischapparatur gegebenenfalls eine Feststoffschleuse (4) vorgeschaltet werden, durch welche auch das Ansatzwasser oder Teile des Ansatzwassers gespült werden können. Zur Beheizung ist die Vormischapparatur (1) vorzugsweise mit einem Doppelmantel versehen, der wahlweise mit einem mit Wasser oder Dampf beaufschlagten Wasserkreislauf verbunden ist. Als Mischeinrichtung können herkömmliche Rührer, beispielsweise ein Blattrührer (2), verwendet werden. Zur Entleerung der Vormischapparatur (1) über die Ableitung (5) kann diese gegebenenfalls mit einer Pumpe (6) ausgerüstet werden. Ist die Vorrichtung so ausgestaltet, daß die Vormischapparatur (1) über dem Polymerisationsbehälter (7) angeordnet ist, kann auf die Pumpe (6) verzichtet werden.

Der Polymerisationsbehälter (7) ist vorzugsweise ein zylindrischer Rührbehälter mit zentrisch eingebautem Rührer (8). Zur Heizung oder Kühlung ist der Polymerisationsbehälter (7) vorzugsweise mit einem Doppelmantel versehen, der mit Heizwasser oder Kühlwasser beaufschlagt wird. In einer bevorzugten Ausführungsform ist der Behälter mit einem Aufsatzkühler, mit Spüleinrichtungen und Sprühvorrichtungen zum Einsprühen von Benetzungsmittel ausgerüstet. Die Ablaufleitung (10) des Polymerisationsbehälters (7) ist vorzugsweise mit Gefälle verlegt, so daß der gesamte Behälterinhalt in den Entgasungsbehälter (11) ablaufen kann.

Der Entgasungsbehälter (11) ist in der Regel ein zylindrischer Behälter mit zentrisch angeordnetem Rührer (12). Außerdem kann der Behälter mit einer Spüleinrichtung versehen werden, welche im geschlossenen System betrieben wird. Der Entgasungsbehälter (11) kann über Vakuumpumpen (14) entgast und über eine Pumpe (16) entleert werden. In einer bevorzugten Ausführungsform sind der obere und untere Teil des Behälters jeweils mit getrennten Heizkühlsystemen, beispielsweise zwei Doppelmänteln, ausgerüstet.

Bei dem erfindungsgemäßen Verfahren wird vorzugsweise so vorgegangen, daß die Vorlage, Durchmischung und Aufheizung der zur Polymerisation benötigten Edukte in einem Rührbehälter erfolgt. Es kann aber auch so vorgegangen werden, daß Vorlage und Durchmischung in dem Vorlagebehälter durchgeführt werden, und die Aufheizung auf Polymerisationstemperatur durch Einblasen von Wasserdampf in die Ablaufleitung zum Polymerisationsbehälter erfolgt, oder die Aufheizung auf Polymerisationstemperatur in der Ablaufleitung mittels eines Wärmetauschers erfolgt.

In einer weiteren bevorzugten Ausführungsform kann die Vormischung so durchgeführt werden, daß Ansatzwasser und Edukte oder Gemische davon in eine Mischstrecke dosiert werden und durch Einblasen von Dampf oder durch Wärmeübertragung mittels eines Wärmetauschers aufgeheizt werden. Als Mischstrecke, das heißt als Vormischapparatur (1), kann dabei beispielsweise die Zuleitung zum Polymerisationsgefäß dienen. In allen genannten Ausführungsformen wird die Vorlage vorzugsweise auf eine Temperatur von 30 bis 90°C erhitzt.

Im allgemeinen werden das Ansatzwasser und zumindest ein Teil der Monomere vorgelegt. Die weiteren zur Polymerisation benötigten Edukte können ganz oder teilweise vorgelegt werden oder erst während der Polymerisation zudosiert werden. In einer bevorzugten Ausführungsform werden Ansatzwasser, Puffersalze und gegebenenfalls Keimlatices vollständig vorgelegt, während die Monomere, Emulgatoren und/oder Schutzkolloide teilweise vorgelegt werden und der Rest während der Polymerisation zudosiert wird. Die Monomere, Emulgatoren und/oder Schutzkolloide können dabei gemeinsam, als wäßrige Voremulsion, oder getrennt zudosiert werden.

Bei der Verwendung eines Redoxinitiatorsystems wird eine der Komponenten, die Oxidationskomponente (Radikalbildner) oder das Reduktionsmittel vorgelegt und die weiteren Komponenten erst nach Überführung des Ansatzes in den Polymerisationsbehälter zudosiert. Vorzugsweise wird das Reduktionsmittel vorgelegt und der Radikalbildner im Polymerisationsbehälter zudosiert. Bei thermischer Initiierung der Polymerisation wird die Vorlage ohne Initiator gemischt und aufgeheizt und der Radikalstarter im Polymerisationsbehälter zudosiert.

Nach der Überführung der auf Polymerisationstemperatur vorerwärmten Mischung in den Polymerisationsbehälter wird die Polymerisation durch Zudosierung des Radikalstarters, bei Verwendung eines Redoxkatalysatorsystems durch Zudosieren der weiteren Katalysatorkomponenten, gestartet. Wesentlich ist dabei, daß die Behälterwand des Polymerisationsbehälters bei der Überführung der vorerhitzten Mischung, spätestens aber zum Zeitpunkt der Zudosierung des Radikalstarters, und während der Dauer der Polymerisation auf eine Temperatur möglichst weit unterhalb der jeweiligen Polymerisationstemperatur gekühlt wird. Vorzugsweise liegt die Wandtemperatur des Polymerisationsbehälters mindestens 5 bis 20°C unterhalb der Polymerisationstemperatur.

Nach Abschluß der Polymerisation wird das Produkt zur Restmonomerentfernung in einen Entgasungsbehälter übergeführt, wobei vorher ein Druckausgleich zwischen Polymerisationsbehälter und Entgasungsbehälter vorgenommen wird. Der Druckausgleich wird dabei so durchgeführt, daß der Differenzdruck p maximal 3 bar beträgt; vorzugsweise beträgt der Differenzdruck p ≤ 1 bar. Nach der Überführung kann der Polymerisationsbehälter mit einer weiteren Charge zur Polymerisation befüllt werden. Vorzugsweise wird ein Entgasungsbehälter verwendet, welcher mit zwei getrennten Heiz/Kühl-Kreisläufen ausgerüstet ist, die so betrieben werden, daß der obere Teil, vorzugsweise etwa die obere Hälfte, des Behälters eine niedrigere Temperatur als der untere Teil, vorzugsweise etwa die untere Hälfte, aufweist. In der bevorzugten Ausführungsform wird die Polymerdispersion etwa auf halber Höhe in den evakuierten Entgasungsbehälter eingeleitet und unter Vakuum bis zum gewünschten Restmonomergehalt entgast, wobei das Restmonomer gegebenenfalls über eine nachgeschaltete Kolonne zurückgewonnen werden kann.

Nach der Entgasung wird die Polymerdispersion abgepumpt. Das Polymerisat kann aus der Polymerdispersion mittels dem Fachmann bekannter Methoden gewonnen werden, beispielsweise durch Koagulation und/oder Trocknung.

Das erfindungsgemäße Verfahren eignet sich zur Polymerisation von ethylenisch ungesättigten Monomeren nach dem Emulsions-, Suspensions- oder Mikrosuspensionsverfahren in wäßrigem Medium. Bevorzugt ist das Emulsionspolymerisationsverfahren.

Geeignete ethylenisch ungesättigte Monomere sind beispielsweise Vinylhalogenide wie Vinylchlorid oder Vinylidenchlorid; Vinylester von unverzweigten oder verzweigten Alkylcarbonsäuren mit 1 bis 15 C-Atomen; Ester der Acrylsäure oder Methacrylsäure mit unverzweigten oder verzweigten Alkoholen mit 1 bis 12 C-Atomen; Olefine oder Diene wie Ethylen, Propylen, Butadien, Isopren; Vinylaromaten wie Styrol, Methylstyrol, Vinyltoluol.

Besonders geeignet und daher bevorzugt ist das erfindungsgemäße Verfahren für die Homo-, Co- und Pfropfcopolymerisation von Vinylchlorid in wäßrigem Medium, insbesonders nach dem Emulsionspolymerisationsverfahren.

Als Comonomere geeignet sind beispielsweise Vinylester wie Vinylacetat, (Meth)acrylsäureester wie Methylmethacrylat, Methylacrylat, n-Butylacrylat, Vinylaromaten wie Styrol, Olefine wie Ethylen, ethylenisch ungesättigte Mono- und Dicarbonsäuren wie Acrylsäure, Methacrylsäure, Maleinsäure, Fumarsäure sowie deren Mono- und Diester, Acrylamid, Vinylsulfonat, 2-Acrylamido-2-methylpropansulfonat, wobei die wasserlöslichen stark polaren Monomere meist in geringen Mengen zur Stabilisierung der Dispersion eingesetzt werden.

Hinsichtlich der, für die Polymerisation von ethylenisch ungesättigten Verbindungen in wäßrigem Medium üblichen, Reaktionsbedingungen, Initiatorsysteme und weiteren Zusatzstoffe wie Emulgatoren, Schutzkolloide oder Puffer, wird auf die vorstehend genannten Druckschriften verwiesen.

Die als bevorzugt genannte Emulsionspolymerisation wird üblicherweise bei einer Temperatur von 30 bis 90°C durchgeführt.

Zur Einleitung der Emulsionspolymerisation werden die gebräuchlichen wasserlöslichen Radikalbildner in einer Menge von vorzugsweise 0.001 bis 0.3 Gew%, bezogen auf die Monomerphase, eingesetzt. Beispiele für Radikalbildner sind Ammonium- und Kaliumperoxodisulfat; Wasserstoffperoxid; Alkylhydroperoxide wie t-Butylhydroperoxid; Kalium-, Natrium- und Ammoniumperoxodiphosphat. Die Initiierung kann entweder durch alleinige Verwendung der genannten Peroxoverbindungen erfolgen, oder bei niederen Temperaturen durch Einsatz einer Kombination der genannten Peroxoverbindungen mit Reduktionsmitteln erfolgen. Geeignete Reduktionsmittel sind beispielsweise Natriumformaldehydsulfoxylat, Natriumsulfit, Natriumhydrogensulfit, Dithionit oder Ascorbinsäure, welche in einer Menge von vorzugsweise 0.01 bis 0.5 Gew%, bezogen auf die Monomerphase, eingesetzt werden können.

Als Dispergiermittel können die bei der Emulsionspolymerisation gebräuchlichen ionischen und nichtionischen Emulgatoren verwendet werden. Vorzugsweise werden 0.1 bis 10.0 Gew% Emulgator, bezogen auf die Monomerphase, eingesetzt. Geeignete Emulgatoren sind beispielsweise anionische Tenside wie Alkylsulfate mit einer Kettenlänge von 8 bis 18 C-Atomen, Alkyl- und Alkylarylethersulfate mit 8 bis 18 C-Atomen, Alkyl- und Alkylarylethersulfate mit 8 bis 18 C-Atomen im hydrophoben Rest und bis zu 40 Ethylen- oder Propylenoxid-Einheiten, Alkyl- oder Alkylarylsulfonate mit 8 bis 18 C-Atomen, Ölsäuresulfonate, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Gegebenenfalls können zur Polymerisation noch Puffersubstanzen, wie Natriumcarbonat, Natriumhydrogenphosphat oder Alkaliacetate eingesetzt werden.

Die Polymerisation wird diskontinuierlich, mit oder ohne Verwendung von Keimlatices, unter Vorlage aller oder einzelner Bestandteile des Reaktionsgemisches oder unter teilweiser Vorlage und Nachdosierung der oder einzelner Bestandteile des Reaktionsgemisches durchgeführt.

Gegenüber der aus dem Stand der Technik bekannten Verfahrensweisen, bei der die Aufheizung des Polymerisationsansatzes in Gegenwart des Initiators und üblicherweise, ebenso wie die Restmonomerentfernung, im Polymerisationsbehälter durchgeführt wird, haben sich mit der erfindungsgemäßen Verfahrensweise überraschenderweise folgende Vorteile ergeben:

Die Bildung von störenden Wandbelägen wird mit dem erfindungsgemäßen Verfahren im Vorlage-, Polymerisations- und Entgasungsbehälter weitgehend verhindert. Das hat zur Folge, daß mit dem erfindungsgemäßen Verfahren im Gegensatz zu bisher praktizierten Verfahrensweisen, bei denen nach jeder Charge der Polymerisationsbehälter zur Reinigung geöffnet werden muß, in geschlossener Fahrweise mehr als 10 Ansätze nacheinander ohne Reinigung der Behälter gefahren werden können. Damit werden die, beispielsweise bei der Vinylchloridpolymerisation, bei Öffnung der Behälter auftretenden Emissionen, vermieden. Weiter entfällt die Notwendigkeit von aufwendigen Reinigungsschritten zwischen den einzelnen Chargen oder die Aufbringung von Wandbeschichtungen mit den damit verbundenen Nachteilen.

Die folgenden Beispiele dienen der weiteren Erklärung der Erfindung und besitzen keinen beschränkenden Charakter.

### Beispiel 1:

Das erfindungsgemäße Verfahren wurde in der Vorrichtung gemäß Fig. 1 durchgeführt.

In einen evakuierten Rührbehälter (1) (25 m³ Autoklav) mit Blattrührer (2) und Dosiereinrichtungen (3) wurden über eine Feststoffschleuse (4) 5 kg Puffersalze (3 kg Ammoniumbicarbonat, 2 kg Natriumbisulfit und Spuren von Cu- und Fe-Salzen) mit 2000 kg Wasser gespült und weitere 6000 kg Wasser, 150 kg einer wäßrigen Lösung von Ammoniumlaurat (15 Gew.% Emulgatorgehalt) und 4000 kg Vinylchlorid darin vorgelegt. Die Vorlage wurde unter Rühren auf 55°C aufgeheizt und über Leitung (5) mittels einer Pumpe (6) in den evakuierten Polymerisationsbehälter (7) (25 m³ Autoklav) mit Blattrührer (8) und Dosiereinrichtungen (9) umgepumpt und 1000 kg Wasser nachgespült. Die Manteltemperatur des Polymerisationsbehälters (7) betrug 50°C.

In den Polymerisationsbehälter (7) wurden über die Dosiereinrichtungen (9) innerhalb von 6 Stunden 6500 kg Vinylchlorid, weitere 800 kg der Emulgatorlösung und 200 kg wäßrige Kaliumperoxidisulfat-Lösung (1.0 %-ig) dosiert, wobei die Manteltemperatur vor Beginn der Initiatordosierung auf 30°C abgesenkt worden war. Nach 6 Stunden wurde die Polymerisation abgebrochen und die Polymeremulsion über Leitung (10) in den evakuierten Entgasungsbehälter (11) (40 m³) abgelassen, wobei vorher ein fast vollständiger Druckausgleich ( p < 3 bar) zwischen Polymerisationsbehälter und Entgasungsbehälter vorgenommen wurde. Der Entgasungsbehälter (11) war mit einem Rührer (12) ausgerüstet und wurde über Leitung (13) und die Vakuumpumpe (14) evakuiert. Die Zuleitung (10) erfolgte etwa auf halber Höhe des Entgasungsbehälters (11). Anschließend wurde mit 500 kg Wasser nachgespült.

Im Entgasungsbehälter (11) wurde der PVC-Latex 2 Stunden bei 80°C unter Rühren entgast, wobei die obere Hälfte des Behälters mit einem von der unteren Hälfte getrennten Heizkühlkreislauf ausgerüstet war, welcher in der oberen Hälfte um etwa 5°C niederer als in der untere Hälfte betrieben wurde. Danach wurde die Charge auf ca. 60°C abgekühlt, unter anliegendem Vakuum über Leitung (15) mittels der Pumpe (16) abgepumpt und mit 500 kg Wasser nachgespült.

Der gesamte Vorgang wurde zehnmal wiederholt, mit dem Unterschied, daß bei den weiteren Chargen zu Beginn eines jeden Schrittes in den verschiedenen Behältern Vinylchloridatmosphäre herrschte. Nach der 10. Charge wurde aus den Behältern, durch das Anlegen von Vakuum, die Vinylchloridatmosphäre entfernt und die Behälter geöffnet.

Der Vorlagebehälter (1) war ohne jeden Wandbelag und mußte nicht gereinigt werden. Die Wand des Polymerisationsbehälters (7) war mit einem weißen Belag versehen, welcher nach der Hochdruckreinigung mit Wasser ein Naßgewicht von 5 kg hatte. Der Entgasungsbehälter (11) wurde mit einem eingebauten Hochdruckreinigungsgerät gereinigt; der Belag wog naß 40 kg.

### Vergleichsbeispiel A:

Zum Vergleich wurde eine Polymerisation, wie sie dem Stand der Technik entspricht, in der Vorrichtung gemäß Fig. 2 durchgeführt.

In einem 25 m³ Autoklaven (17) mit Blattrührer (18) und Dosiereinrichtungen (19, 20, 21) wurden 5 kg Puffersalze (3 kg Ammoniumbicarbonat, 2 kg Natriumbisulfit und Spuren von Cu- und Fe-Salzen) über das Mannloch vorgelegt, dieses verschlossen, der Behälter evakuiert und über (19) mit 10000 kg vollentsalztem Wasser, über (20) mit 150 kg einer wäßrigen Lösung von Ammoniumlaurat (15 Gew.% Emulgatorgehalt) und über (20) mit 4000 kg Vinylchlorid befüllt. Der Polymerisationsansatz wurde auf 54°C aufgeheizt und innerhalb von 6 Stunden wurden 6000 kg Vinylchlorid, weitere 800 1 Emulgatorlösung und 200 kg Kaliumperoxodisulfat-Lösung (1.0 %-ig) über (21) dosiert. Danach wurde das Restmonomer über Leitung (22) abgezogen, wobei der gebildete PVC-Latex im Autoklaven (17) 2 Stunden lang auf 80°C aufgeheizt wurde. Die Charge wurde anschließend abgekühlt und über Leitung (23) abgelassen.

Die Autoklavenwand war nach Ablassen der Charge mit einer festen weißen Kruste bedeckt, welche mit Hochdruckwasser von 200 bar entfernt wurde. Der abgespülte Wandbelag hatte ein Naßgewicht von ca. 50 kg.

## Patentansprüche

1. Verfahren zur radikalischen Polymerisation von ethylenisch ungesättigten Monomeren in wäßrigem Medium, dadurch gekennzeichnet, daß
a) das zur Polymerisation eingesetzte Ansatzwasser und die zur Polymerisation benötigten Edukte wie Monomere, Keimlatex, Puffersubstanzen, Emulgatoren und/oder Schutzkolloide ganz oder teilweise in einer Vormischapparatur vorgelegt und durchmischt werden, und vor Überführung in den Polymerisationsbehälter auf die Polymerisationstemperatur aufgeheizt werden, wobei bei Verwendung eines thermischen Radikalinitiators kein Initiator und bei Verwendung eines Redoxinitiatorsystems nur einzelne Initiatorkomponenten vorgelegt werden,
b) die auf die Polymerisationstemperatur aufgeheizte Mischung in einen Polymerisationsbehälter übergeführt wird, dessen Wand bei Zuführung der Mischung und während der Polymerisation, durch Kühlung auf einer Temperatur unterhalb der Polymerisationstemperatur gehalten wird, die Polymerisation durch Zudosieren des thermischen Initiators oder der weiteren Initiatorkomponenten des Redoxinitiatorsystems gestartet wird, wobei gegebenenfalls die restlichen Edukte beim Start und/oder während der Polymerisation zudosiert werden, und
c) nach Abschluß der Polymerisation und Druckausgleich bis zu einem Differenzdruck p ≤ 3 bar zwischen Polymerisationsbehälter und Entgasungsbehälter, die Polymerdispersion in einen Entgasungsbehälter abgelassen wird und durch Aufheizen und/oder Anlegen von Vakuum entgast wird.

2. Verfahren nach Anspruch 1, dadurch gekennzeichnet, daß das Verfahren zur Homo-, Co- und Pfropfcopolymerisation von Vinylchlorid eingesetzt wird.

3. Verfahren nach Anspruch 2, dadurch gekennzeichnet, daß die Polymerisation nach dem Emulsionspolymerisationsverfahren durchgeführt wird.

4. Verfahren nach Anspruch 1 bis 3, dadurch gekennzeichnet, daß die Vorlage, Durchmischung und Aufheizung in Schritt a) so durchgeführt wird, daß Ansatzwasser und Edukte oder Gemische davon in eine Zuleitung zum Polymerisationsbehälter dosiert werden und durch Einblasen von Dampf oder durch Wärmeübertragung mittels eines Wärmeaustauschers aufgeheizt werden.

5. Vorrichtung zur Durchführung des Verfahrens nach Anspruch 1 bis 4, im wesentlichen bestehend aus einer Vormischapparatur (1), einen über Leitung (5) daran angekoppelten Polymerisationsbehälter (7), welcher über Leitung (10) mit dem Entgasungsbehälter (11) verbunden ist, wobei die Vormischapparatur (1) im wesentlichen mit Zuleitungen (3) zum Stoffeintrag, mit einer Heizeinrichtung und gegebenenfalls einer Mischeinrichtung ausgerüstet ist, der Polymerisationsbehälter (7) im wesentlichen mit Zuleitungen (9) zum Stoffeintrag, mit einer Heiz/Kühleinrichtung und einem Rührer (8) ausgerüstet ist und der Entgasungsbehälter (11) im wesentlichen mit einer Heiz/Kühleinrichtung, einem Rührer (12) und einer Vakuumleitung (13) ausgerüstet ist.

6. Vorrichtung nach Anspruch 5, dadurch gekennzeichnet, daß die Vormischapparatur (1) als Zuleitung zum Polymerisationsbehälter ausgestaltet ist.

## Claims

1. Process for the free radical polymerization of ethylenically unsaturated monomers in an aqueous medium, characterized in that
a) the mixing water employed for the polymerization and the starting materials required for the polymerization, such as monomers, seed latex, buffer substances, emulsifiers and/or protective colloids, are initally introduced, in their entirety or in part, into a premixing apparatus and are mixed thoroughly, and, before transfer into the polymerization container, are heated up to the polymerization temperature, no initiator being initially introduced if a thermal free radical initiator is used and only individual initiator components being initially introduced if a redox initiator system is used,
b) the mixture, which has been heated up to the polymerization temperature, is transferred into a polymerization container, the wall of which is kept at a temperature below the polymerization temperature, by cooling, on feeding in the mixture and during the polymerization, the polymerization is started by metering in the thermal initiator or the other initiator components of the redox initiator system, if appropriate the remaining starting materials being metered in at the start and/or during the polymerization, and
c) after the end of the polymerization and after pressure compensation to a differential pressure of p ≤ 3 bar between the polymerization container and degassing container, the polymer dispersion is drained into a degassing container and is degassed by heating up and/or applying a vacuum.

2. Process according to Claim 1, characterized in that the process is employed for homo-, co- and grafting copolymerization of vinyl chloride.

3. Process according to Claim 2, characterized in that the polymerization is carried out by the emulsion polymerization process.

4. Process according to Claim 1 to 3, characterized in that the initial introduction, thorough mixing and heating in step a) is carried out such that mixing water and starting materials or mixtures thereof are metered into a feed line to the polymerization container and are heated up by blowing in steam or by heat transfer by means of a heat exchanger.

5. Device for carrying out the process according to Claim 1 to 4, which essentially comprises a premixing apparatus (1), a polymerization container (7) which is coupled to this via line (5) and is connected to the degassing container (11) via line (10), the premixing apparatus (1) essentially being equipped with feed lines (3) for introduction of material and with a heating device and, if appropriate, a mixing device, the polymerization container (7) essentially being equipped with feed lines (9) for introduction of material and with a heating/cooling device and a stirrer (8), and the degassing container (11) essentially being equipped with a heating/cooling device, a stirrer (12) and a vacuum line (13).

6. Device according to Claim 5, characterized in that the premixing apparatus (1) is designed as a feed line to the polymerization container.

## Revendications

1. Procédé de polymérisation radicalaire de monomères éthyléniquement insaturés en milieu aqueux, caractérisé en ce
a) que l'on place initialement et que l'on mélange, dans un appareillage de pré-mélange, en entier ou en partie, l'eau de mélange utilisée en vue de la polymérisation et les produits de départ nécessaires à la polymérisation, comme des monomères, du latex d'ensemencement, des substances tampon, des émulsifiants et/ou des colloïdes protecteurs, et que l'on y chauffe ces derniers avant le transfert dans la cuve de polymérisation à la température de polymérisation, aucun agent initiateur n'étant introduit initialement en cas d'utilisation d'un agent initiateur radicalaire thermique, et certains composants d'agents initiateurs seulement étant introduits en cas d'utilisation d'un système d'agents initiateurs redox,
b) que l'on transfère le mélange chauffé à la température de polymérisation dans une cuve de polymérisation, dont la paroi, lors du transfert du mélange et pendant la polymérisation, est maintenue, par refroidissement, à une température en dessous de la température de polymérisation, que l'on amorce la polymérisation par addition dosée de l'agent initiateur thermique ou des autres composants d'agents initiateurs du système d'agents initiateurs redox, les produits de départ restants étant, le cas échéant, ajoutés par dosage au moment du démarrage et/ou pendant la polymérisation, et
c) que l'on évacue, après achèvement de la polymérisation et équilibrage de la pression jusqu'à une pression différentielle p ≤ 3 bar entre la cuve de polymérisation et la cuve de dégazage, la dispersion de polymères dans une cuve de dégazage, et que l'on dégaze par chauffage et/ou par application de vide.

2. Procédé selon la revendication 1, caractérisé en ce que l'on utilise le procédé en vue de l'homopolymérisation, de la copolymérisation et de la polymérisation par greffage du chlorure de vinyle.

3. Procédé selon la revendication 2, caractérisé en ce que la polymérisation est effectuée conformément au procédé de polymérisation en émulsion.

4. Procédé selon les revendications 1 à 3, caractérisé en ce que l'introduction initiale, le mélange et le chauffage dans l'étape a) sont effectués de sorte que l'eau de mélange et les produits de départ ou les mélanges de ces derniers soient dosés dans une conduite d'alimentation en direction de la cuve de polymérisation et sont chauffés par insufflation de vapeur ou par transfert thermique à l'aide d'un échangeur thermique.

5. Dispositif de mise en oeuvre du procédé selon les revendications 1 à 4, se composant essentiellement d'un appareillage de pré-mélange (1), d'une cuve de polymérisation (7) qui y est couplée par un conduit (5), qui est relié par un conduit (10) à la cuve de dégazage (11), l'appareil de pré-mélange (1) étant équipé pour l'essentiel de conduites d'alimentation (3) en vue de l'introduction de substances, d'un équipement de chauffage et, le cas échéant, d'un équipement de mélange, la cuve de polymérisation (7) étant équipée pour l'essentiel de conduites d'alimentation (9) en vue de l'introduction de substances, d'un équipement de chauffage/de refroidissement et d'un agitateur (8), et la cuve de dégazage (11) étant équipée pour l'essentiel d'un équipement de chauffage/de refroidissement, d'un agitateur (12) et d'un conduit à vide (13).

6. Dispositif selon la revendication 5, caractérisé en ce que l'appareillage de pré-mélange (1) est réalisé en tant que conduite d'alimentation en direction de la cuve de polymérisation.
